Europäisches Patentamt

European Patent Office

Office européen des brevets

(11) Numéro de publication: **0 189 732 B1**

# FASCICULE DE BREVET EUROPEEN

(45) Date de publication de fascicule du brevet:
18.12.91

(51) Int. Cl.⁵: **H02P 6/02**, H02P 8/00

(21) Numéro de dépôt: **85810030.8**

(22) Date de dépôt: **29.01.85**

(54) Dispositif d'entraînement d'un moteur électrique équipé d'un rotor à alimentation permanente.

(43) Date de publication de la demande:
06.08.86 Bulletin 86/32

(45) Mention de la délivrance du brevet:
18.12.91 Bulletin 91/51

(84) Etats contractants désignés:
CH DE FR GB IT LI

(56) Documents cités:
EP-A- 0 035 258
EP-A- 0 066 159
GB-A- 2 092 780
US-A- 3 940 677
US-A- 4 376 262

(73) Titulaire: **Asgalium S.A.**
**Avenue Léopold-Robert 73a**
**CH-2300 La Chaux-de-Fonds(CH)**

(72) Inventeur: **Heyraud, Marc, Dr.**
**Recorne 24b**
**CH-2300 la Chaux-de-Fonds(CH)**
Inventeur: **Kureth, Jean-Bernard**
**Jardinière 103**
**CH-2300 la Chaux-de-Fonds(CH)**

(74) Mandataire: **Rochat, Daniel Jean et al**
**Bovard SA Ingénieurs-Conseils ACP Optin-**
**genstrasse 16**
**CH-3000 Bern 25(CH)**

## Description

Les moteurs d'asservissement comportent en général un rotor à aimantation permanente. On connait deux branches principales de ce genre de moteur, c'est-à-dire:

- les moteurs à courant continu
- les moteurs pas à pas.

Les moteurs à courant continu peuvent être caractérisés de manière générale par le fait que la commutation est assurée de façon interne au moteur, de telle sorte que la position du rotor soit optimale. Le plus souvent on s'efforce d'utiliser une phase exclusivement lorsque la position du rotor y permet une constante de couple élevée (c'est-à-dire lorsque le couple obtenu par unité de courant est maximal). Lorsque le mouvement relatif rotor-stator conduit à une baisse de constante de couple de la phase enclenchée, et qu'une autre phase serait plus efficace, on commute le courant dans cette dernière. Dans le cas du moteur à cc classique, c'est le collecteur qui provoque cette commutation en fonction de la position du rotor. Dans le cas du moteur à cc à aimant tournant (sans collecteur), la commutation est par exemple commandée par les signaux provenant d'une paire de sondes de Hall qui "connaissent" la position de l'aimant du rotor en mesurant son champ magnétique.

Pour un moteur pas à pas au contraire, une séquence de commutations n'est pas "automatiquement" prise en charge par des organes internes du moteur. C'est une commande logique externe au moteur qui impose le choix de la phase parcourue par le courant, ainsi que le rythme de commutation. On peut donc dire qu'il s'agit d'une commutation en fonction du temps, par opposition à une commutation en fonction de la position angulaire du rotor. Les avantages du moteur pas à pas sont en particulier:

- comportement "digital" en boucle ouverte: à une impulsion de commande correspond un mouvement mécanique fixe,
- les erreurs de position ne sont pas cumulatives.

La publication de demande de brevet GB-2,092,780 décrit un système d'entraînement pour un moteur sans collecteur, qui comprend des sondes de Hall et un processeur capable de traîter les signaux de ces sondes de manière à faire tourner le moteur à une vitesse prédéterminée.

L'exposé de brevet US-4,376,262 décrit un moteur dont le fonctionnement de base est du type pas à pas. La fréquence des impulsions étant donnée par une source de fréquence extérieure, mais dont le circuit de commande comporte un détecteur de vitesse et des moyens pour assurer temporairement un fonctionnement à une vitesse qui varie progressivement en s approchant de la vitesse de consigne, si le détecteur décèle une variation de la vitesse effective par rapport à la vitesse de consigne.

En outre, les documents EP-A-35258 et EP-A-66159 décrivent des dispositifs de commande de moteurs qui assurent un entraînement du rotor analogue à celui d'un moteur à courant continu sans collecteur durant la plus grande partie du chemin à effectuer et analogue à celui d'un moteur pas à pas durant la période finale de l'arrêt du rotor. Ces agencements connus ne répondent pas au but de la présente invention.

En effet, l'invention part de la constatation qu'il existe un besoin pour un dispositif capable d'entraîner un arbre de prise de force à volonté et aussi longtemps qu'on le désire, soit d'une manière semblable à celle d'un moteur à courant continu soit d'une manière semblable à celle d'un moteur pas à pas.

A cet effet, l'exposé de brevet US-3,940,677 propose un agencement dans lequel un moteur pas à pas et un moteur à courant continu sans collecteur sont accouplés sur le même arbre.

La présente invention vise à réaliser un agencement plus simple, moins encombrant et plus efficace que cet agencement connu.

Elle a donc pour but de réaliser un dispsoitif de commande automatique simple et peu encombrant, facile à adjoindre à un moteur et permettant de le faire fonctionner alternativement en moteur à courant continu ou en moteur pas à pas, les deux modes de fonctionnement pouvant se succéder sans aucun arrêt intermédiaire du moteur.

Dans ce but, la présente invention a pour objet un dispositif d'entraînement d'un moteur électrique comprenant un stator et un rotor formant deux parties de moteur dont l'une comporte un enroulement moteur à une ou plusieurs phases et l'autre un organe magnétique à aimantation permanente, à une ou plusieurs paires de pôles, et comprenant en outre des moyens d'actionnement, caractérisé en ce que les moyens d'actionnement comprennent en combinaison, d'une part, un générateur de signaux d'horloge et un générateur de signaux d'orientation indiquant l'orientation du rotor à des instants successifs et, d'autre part, des moyens de commande connectés aux deux générateurs et agencés de manière à commande l'enclenchement et le déclenchement périodique de la ou des dites phases de l'enroulement sélectivement selon l'un de deux modes de fonctionnement qui comportent un premier mode où les moyens de commande répondent à des signaux d'horloge émis par le générateur de signaux d'horloge et un second mode où les moyens de commande répondent à des signaux d'orientation émis par le générateur de signaux d'orientation, et des moyens sélecteurs permettant de mettre en oeuvre à volonté l'un ou l'autre des dits modes de fonctionnement.

On va décrire ci-après, à titre d'exemple, une forme d'exécution de l'objet de l'invention en se référant au dessin annexé, dont:

la fig. 1 est une vue schématique représentant le moteur,

la fig. 2 un schéma-bloc d'une première forme d'exécution du dispositif d'entraînement,

la fig. 3 un schéma bloc représentant une seconde forme d'exécution du dispositif selon l'invention,

la fig. 4 un schéma bloc d'une troisimème forme d'exécution de l'objet de l'invention,

la fig. 5 une vue partielle et schématique représentant une partie du rotor à aimantation permanente du moteur auquel le schéma de la fig. 4 s'applique,

la fig. 6 un schéma expliquant le fonctionnement en moteur à courant continu du dispositif de la fig. 4, et

la fig. 7 un schéma plus détaillé montrant les éléments électroniques utilisés dans un des blocs représentés à la fig. 2.

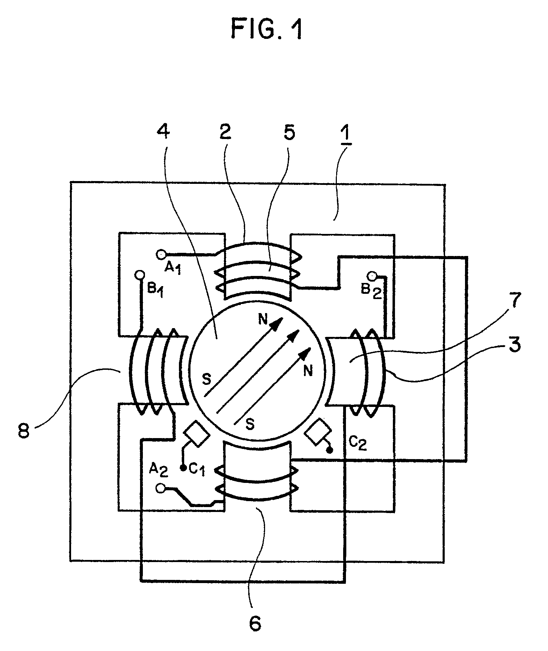

Les moteurs du type à rotor à aimantation permanente sont connus en soi.Schématiquement, un moteur de ce genre comprend comme on le voit à la fig. 1 un circuit magnétique 1, des enroulements moteurs 2 et 3, et un rotor à aimantation permanentet 4. Dans le schéma de la fig. 1, le rotor 4 présente une aimantation diamétrale créant une paire de pôles magnétiques N-S Les deux enroulements moteur 2 et 3 sont bobinés sur des éléments polaires opposés 5, 6, 7, 8. L'enroulement 2 comporte une borne d'entrée a1 et une borne de sortie a2, tandis que l'enroulement 3 comporte une borne d'entrée b1 et une borne de sortie b2. Les impulsions de courant doivent être envoyées successivement dans les enroulements 2 et 3 de sorte que le moteur fonctionne en moteur à deux phases. Si la séquence de succession des impulsions et leur durée sont commandées par un dispositif extérieur au moteur avec une fréquence prédéterminée et de telle façon qu'entre chaque impulsion le rotor s'arrête dans l'une des deux positions déterminées par les paires d'éléments polaires 5, 6 et 7, 8, alors on a affaire à un fonctionnement en moteur pas à pas. Si en revanche, les impulsions sont commandées en fonction de l'orientation du champ d'aimantation du rotor, alors le mouvement du rotor est auto-réglé et l'on a affaire à un fonctionnement en moteur à courant continu. Dans le schéma de la fig. 1, on a représenté en c1 et c2 deux capteurs, dont le rôle sera expliqué plus loin et qui permettent pour certaines formes d'exécution du dispositif d'assurer le fonctionnement auto-réglé du rotor 4.

Dans le fonctionnement en mode pas à pas, la fréquence des impulsions peut être augmentée à un point tel que le mouvement du rotor est pratiquement continu. On a alors un fonctionnement quasi synchrone, mais comme on le sait, un tel moteur ne peut pas être entraîné de façon sûre à une vitesse aussi grande que celle qu'il est possible d'atteindre d'un moteur à courant continu dont le rotor a la même inertie, la même inductance et le même nombre de pôles.

En revanche, on sait que l'un des avantages du fonctionnement en moteur pas à pas est que, dans chacune des positions d'arrêt du rotor, ce dernier est bloqué par un couple de retention qui provient dans une exécution comme celle de la fig. 1 de la corrélation entre les effets du champ d'aimantation du rotor et des éléments polaires saillants 7, 8, 5, 6. Même en présence d'un couple de charge extérieur, le moteur reste bloqué.

Bien qu'on ait représenté à la fig. 1 un moteur à deux phases et une paire de pôles, il est bien entendu que le dispositif qui va être décrit peut être réalisé de façon à s'appliquer à des moteurs de n'importe quel nombre de phases et de paires de pôles, y compris les moteurs à un seul pôle magnétique.

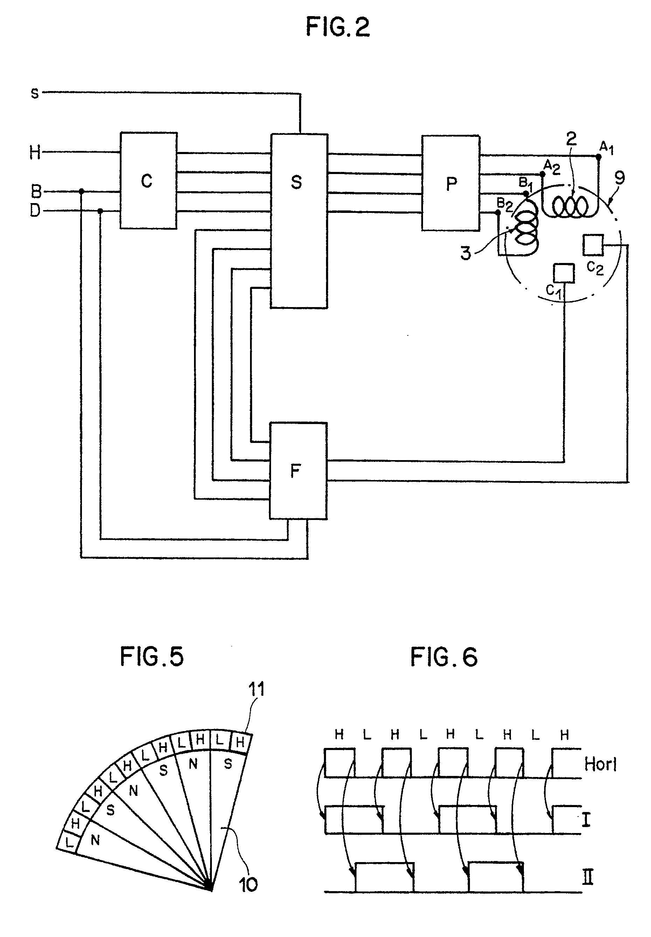

A la fig. 2, le moteur est représenté schématiquement et désigné par le chiffre 9. Les connexions d'entrée a1, a2, b1, b2 des enroulements 2 et 3 sont reliées aux bornes de sortie d'un circuit P qui est un circuit de puissance assurant l'interface entre des conducteurs à tension relativement élevée capables d'alimenter les deux phases 2 et 3 du moteur au moyen de courants d'intensité et de tension convenables, et des conducteurs d'entrée prévus pour véhiculer des signaux de commande assurant essentiellement l'enclenchement et le déclenchement des phases sur les enroulements 2 et 3. Les conducteurs d'entrée du circuit P sont raccordés à la sortie d'un circuit S qui est un sélecteur. Ce sélecteur est piloté par une ligne d'entrée s. Du côté de son entrée, il est raccordé d'une part à des conducteurs provenant d'un circuit C, et d'autre part à des conducteurs provenant d'un circuit F. Dans la forme d'exécution décrite, le circuit C est un circuit de commande. Sur son entrée, il reçoit par un conducteur H des signaux d'horloge qui ont la fréquence requise pour piloter le moteur 9 lorsqu'il fonctionne en moteur pas à pas. Une autre ligne d'entrée B permet d'assurer l'enclenchement et le déclenchement du moteur, tandis qu'une troisième ligne d'entrée D permet de commander le sens de rotation du moteur et agit donc sur l'ordre dans lequel les deux phases 2 et 3 sont alimentées.

Quant au circuit F, c'est un circuit de mise en forme de signaux de commande. Sur son entrée, il reçoit les signaux émis par les deux capteurs c1 et c2. Ces capteurs sont en principe des sondes de Hall qui sont sensibles au champ magnétique du rotor à l'endroit où elles sont placées et qui envoient vers le circuit F des signaux indiquant l'instant auquel un des pôles N ou S du rotor passe en regard de l'une ou de l'autre des sondes. Le circuit F est agencé de façon à mettre en forme ces signaux. Lorsque la ligne de pilotage s polarise le circuit S de façon que les lignes d'entrée provenant du circuit F conduisent les signaux directement au circuit P, ces signaux sont capables de piloter la partie haute puissance du circuit P. On remarque que les lignes de blocage et de commande de direction sont également raccordées au circuit F.

Ainsi, l'agencement décrit permet de faire fonctionner à volonté le moteur 9 en moteur pas à pas ou en moteur à courant continu. Il suffit pour cela que le niveau logique de la ligne s soit ajusté en conséquence. Dans le fonctionnement en moteur pas à pas, la fréquence des impulsions est donnée directement par la fréquence des signaux d'horloge provenant de la ligne H, alors que dans le fonctionnement en courant continu, ce sont les signaux des capteurs c1, c2 qui, mis en forme dans le circuit F, assurent l'enclenchement et le déclenchement des phases 2 et 3.

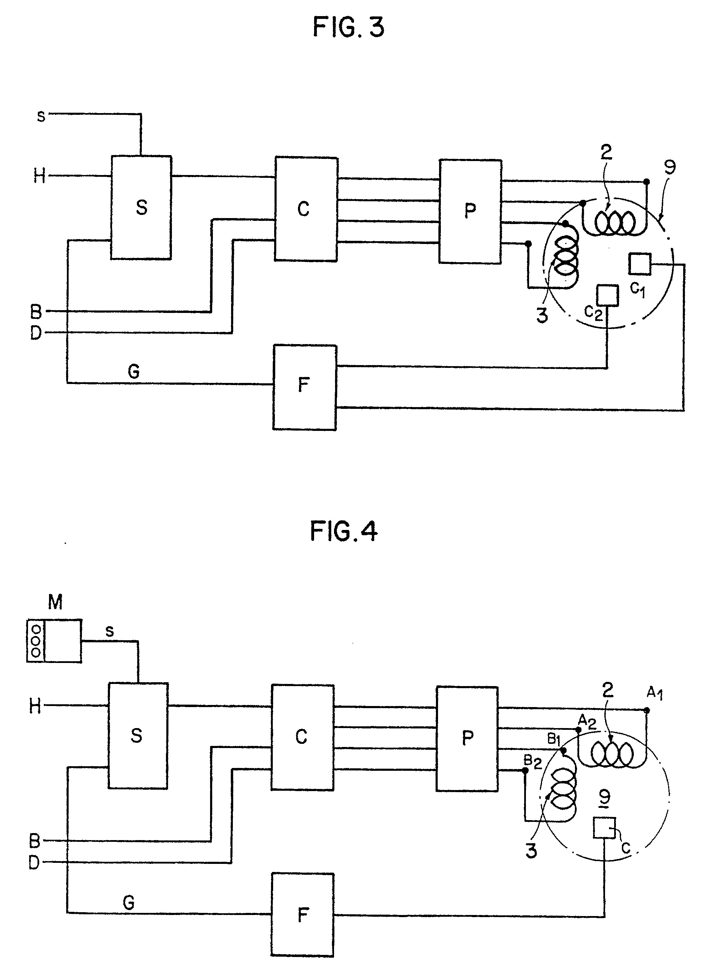

La fig. 3 représente une variante de l'agencement du dispositif de commande fonctionnant sur la base d'un moteur 9 qui est identique à celui qui a été considéré jusqu'à maintenant et qui comporte notamment les deux capteurs de Hall c1 et c2. Dans cette variante, les signaux d'horloge H et les signaux émis par le circuit F sont traités de la même façon. Le circuit F sera dans ce cas différent de celui de la fig. 2 en ce sens que les signaux provenant des deux capteurs c1, c2 seront transmis en tant que signaux de commande sans avoir été au préalable mis en forme. La mise en forme d'impulsions aptes à piloter le circuit de puissance P s'effectuera aussi bien pour les signaux d'horloge H que pour les signaux émis par le circuit F dans le circuit de commande C. C'est la raison pour laquelle une ligne G relie la sortie du circuit F avec une entrée du circuit S parallèle à la ligne d'entrée des signaux d'horloge H. Suivant que le circuit sélecteur est polarisé pour le fonctionnement en moteur pas à pas ou en moteur à courant continu, ce sont les signaux H ou G qui seront transmis au circuit C dans lequel entrent également des signaux assurant le sens de rotation du moteur et son enclenchement ou son déclenchement.

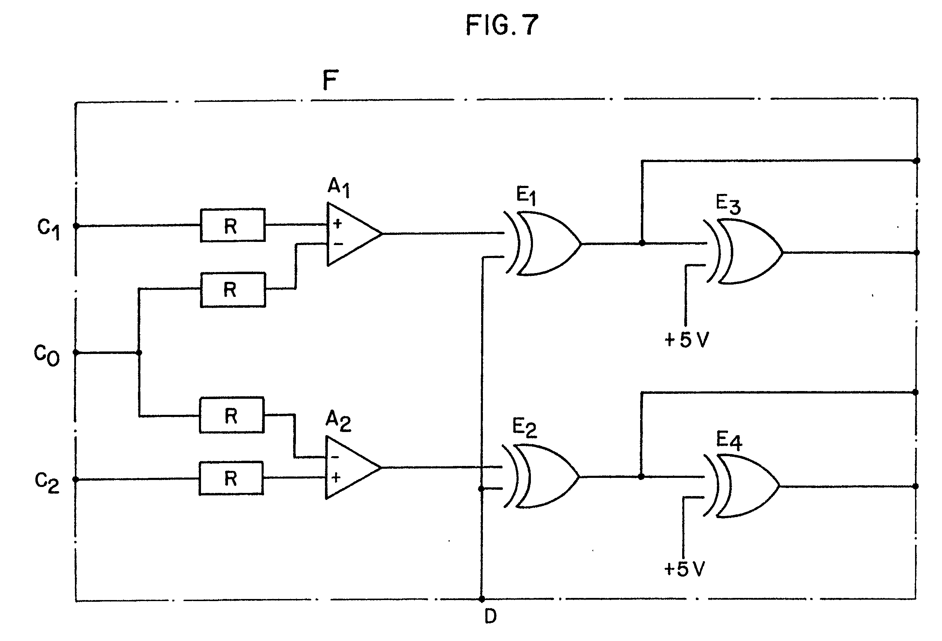

La fig. 4 montre encore une autre forme de réalisation du dispositif de commande. Ici également le circuit F émet dans la ligne G des signaux qui sont traités en parallèle avec les signaux d'horloge H dans le circuit sélecteur S, les signaux H ou les signaux G étant transmis au circuit de commande C selon la polarisation de l'entrée de sélection s. Toutefois, dans cette forme d'exécution du dispositif, on a introduit une simplification dans le sens qu'il n'existe plus qu'un seul capteur c au lieu des deux capteurs c1 et c2 des formes d'exécution précédentes. Dans ce cas, pour permettre le fonctionnement en courant continu, il faut que le capteur c soit apte à signaler tous les instants d'enclenchement de l'une ou de l'autre des phases en fonction de l'orientation momentanée du rotor. Pour cela, une solution pratique consiste à agencer le rotor du moteur comme cela est représenté schématiquement à la fig. 5. En fait, cette figure se rapporte au cas d'un rotor à aimantation permanente en forme de disque dans lequel les paires de pôles définissent des axes magnétiques qui sont parallèles à l'axe du rotor et qui sont répartis autour de cet axe. D'autre part, comme on le voit sur la base de la fig. 5, on aurait dans ce cas un rotor ayant un très grand nombre de paires de pôles, en l'occurrence 24 paires de pôles. L'enroulement moteur d'autre part serait à deux phases. Dès lors, il est nécessaire de discriminer en regard de chaque paire de pôles les instant de commutation de chacune des deux phases. C'est la raison pour laquelle on a prévu à la périphérie du disque rotor, dont une partie est représentée en 10 à la fig. 5, on a prévu une région à polarisation auxiliaire désignée par 11 et qui forme une couronne périphérique de ce disque. Dans cette région, des zones polaires auxiliaires à raison de deux zones polaires par paire de pôles sont délimitées grâce à une aimantation effectuée en surcharge à la périphérie du rotor. Avec un agencement de ce genre, il suffit d'utiliser comme capteur c une seule sonde de Hall et celle-ci transmettra à la ligne G des signaux de commande qui auront été élaborés dans le circuit F en fonction des signaux émis par cette sonde. Sans aucune complication pour le circuit on peut ainsi dans la construction du dispositif éviter la présence d'une sonde, ce qui permet de diminuer le prix de revient du dispositif dans une mesure sensible.

Les fonctions réalisées dans le circuit C en mode de fonctionnement en courant continu sont représentées schématiquement par la fig. 6. Les signaux transmis du circuit S au circuit C par la ligne G fonctionnent comme s'il s'agissait de signaux d'horloge (ligne supérieure du schéma) et l'on voit que le passage du niveau logique bas au niveau logique haut a chaque fois pour effet d'enclencher ou de déclencher alternativement l'une des phases, tandis qu'inversément, le passage du niveau logique haut au niveau logique bas enclenche ou déclenche alternativement l'autre phase. Dans le cas d'un moteur à plus de deux phases, il est bien entendu que chaque zone polaire principale du rotor devrait être marquée par un nombre de divisions supérieur à deux. En fait, le nombre de divisions pourrait être un multiple du nombre des phases, mais dans la pratique, la solution la plus efficace consistera en général à choisir pour ces subdivisions un nombre de zones auxiliaires égal au nombre des phases pour chaque zone polaire principale.

Il convient encore d'insister sur le fait que, dans le cas où l'agencement de zones polaires auxiliaires sur le rotor représenterait une complication et une difficulté rien n'empêche avec un dispositif tel que décrit ici d'utiliser pour la détection de l'orientation du rotor des moyens détecteurs différents des sondes de Hall et des champs magnétiques utilisés dans les exemples considérés plus haut. Ainsi, dans le cas d'un dispositif suivant la fig. 4, le capteur unique c pourrait être un capteur de n'importe quel type capable de collaborer avec un marquage d'identification quelconque dont le rotor serait pourvu. C'est ainsi que le capteur c peut par exemple être un capteur optique collaborant avec des trous ou des encoches répartis à la périphérie du rotor, ce dernier étant éclairé par son côté opposé au capteur au moyen d'une lampe. Au lieu de trous ou d'encoches on peut également prévoir des zones réfléchissantes coopérant également avec un capteur optique. On peut également envisager un capteur capacitif fonctionnant par exemple avec des protubérances réparties à la périphérie du rotor, ou un capteur inductif. A la limite, on peut également envisager des capteurs mécaniques sous forme d'un interrupteur qui serait actionné par des protubérances jouant le rôle de cames à la périphérie du rotor.

L'ensemble des éléments de circuit décrits en relation avec les fig. 2, 3 et 4 peut être réalisé au moyen d'éléments standard que l'on trouve dans le commerce. Ainsi, la fig. 7 montre encore dans un exemple de réalisation comment le circuit F peut être constitué. On voit dans cette figure les connexions d'entrée C1, C2 et Co qui sont connectées respectivement au capteur c1, au capteur c2 ainsi qu'à un point commun aux deux capteurs. Ces connexions d'entrée sont reliées à travers des résistances R par exemple de 10 k$\Omega$ à deux amplificateurs A1 et A2, dont les sorties sont connectées à l'une des entrées de deux portes OU exclusives E1 et E2. Les connexions de sortie du circuit F sont connectées d'une part à la sortie de chacune des deux portes E1 et E2, et d'autre part à la sortie de deux portes OU exclusives supplémentaires E3 et E4 dont les entrées sont reliées d'une part à un potentiel commun et d'autre part à la sortie de l'une des deux portes E1 et E2. Les secondes entrées des deux portes $\bar{E}1$ et $\bar{E}2$ sont reliées en commun à une borne d'entrée $\bar{D}$ qui véhicule le signal déterminant le sens de rotation du moteur. On se rend compte qu'il s'agit là d'une réalisation très simple permettant d'assurer le fonctionnement du circuit F dans le cas du schéma de la fig. 2. En ce qui concerne les circuits S, C et P également, on trouve dans le commerce des éléments permettant d'assurer les fonctions requises. C'est ainsi notamment que le circuit L 298 de la maison SGS peut être utilisé dans le dispositif décrit en tant que circuit P pour assurer l'entraînement d'un moteur de 5o V jusqu'à un courant de l'ordre de 2 à 3 A. De même, bien qu'on n'ait jamais envisagé jusqu'à maintenant d'imposer à un circuit susceptible d'être réalisé en circuit intégré les fonctions décrites plus haut en relation avec le bloc C, notamment dans les formes d'exécution des fig. 3 et 4, on s'est aperçu que certains circuits du commerce permettaient de remplir ces fonctions. Ainsi, le circuit mis sur le marché par la maison SGS et désigné par L 297 peut être utilisé en tant que circuit C pour remplir les fonctions décrites ci-dessus.

Au schéma de la fig. 4, le bloc M représente une commande programmation capable de faire varier le niveau logique de la ligne de sélection s en fonction du temps selon un programme prévu d'avance et mémorisé dans le circuit M. Ce programme pourrait être commandé par exemple au moyen de touches en fonction des besoins. Grâce à cela on peut obtenir un passage automatique d'un mode de fonctionnement en courant continu à un mode de fonctionnement en moteur pas à pas et vice versa sans arrêt intermédiaire du moteur. Cette possibilité améliore sensiblement le champ d'utilisation d'un moteur, et, notamment, dans le cas d'une commande d'une machine outil par exemple, de passer d'un mode de fonctionnement à un autre au cours d'un même déplacement d'un équipement mobile tel qu' un porte-burin ou un chariot porte-pièce. Par exemple, au cours d'un déplacement d'une position bien déterminée à une autre position bien déterminée, le dispositif peut fonctionner d'abord en mode pas à pas, auquel cas la position de départ est maintenue avec un couple de rétention qui peut être important, après quoi on passe en mode à courant continu qui permet une vitesse de déplacement élevée pour revenir au mode de fonctionnement pas à pas à la fin du déplacement, de sorte que la position d'arrivée est également déterminée par le couple de rétention du moteur. Il serait possible, avec des circuits logiques supplémentaires, de travailler en demi pas et/ou en commande à courant découpé.

Bien que l'on ait décrit ci-dessus des moteurs dans lesquels l'enroulement est solidaire du stator et l'aimant permanent du rotor, la disposition inverse est également possible.

**Revendications**

1. Dispositif d'entraînement d'un moteur électrique comprenant un stator (1) et un rotor (4) formant deux parties de moteur dont l'une (1) comporte un enroulement moteur (2,3) à une ou plusieurs phases et l'autre un organe magnétique (4) à aimantation permanente, à une ou plusieurs paires de pôles, et comprenant en outre des moyens d'actionnement (P,C,cFG,H,S), caractérisé en ce que les moyens d'actionnement comprennent en combinaison, d'une part un générateur de signaux d'horloge (H) et un générateur de signaux d'orientation (F) indiquant l'orientation du rotor à des instants successifs et, d'autre part, des moyens de commande (C) connectés aux deux générateurs (H,FG) et agencés de manière à commanderl'enclenchement et le déclenchement périodique de la ou des dites phases de l'enroulement sélectivement selon l'un de deux modes de fonctionnement qui comportent un premier mode où les moyens de commande (C) répondent à des signaux d'horloge émis par le générateur de signaux d'horloge (H) et un second mode où les moyens de commande (C) répondent à des signaux d'orientation émis par le générateur de signaux d'orientation (FG), et des moyens sélecteurs (S) permettant de mettre en oeuvre à volonté l'un ou l'autre des dits modes de fonctionnement.

2. Dispositif d'entraînement selon la revendication 1, caractérisé en ce que le générateur des signaux d'orientation comporte un ou plusieurs capteurs (C1, C2, c) ayant des emplacements prédéterminés, fixes par rapport à l'enroulement (2,3) et sensibles aux variations du champ de l'organe magnétiquer (4) aux dits emplacements, et en ce que les moyens de commande comportent un circuit de traîtement (F; S) des signaux émis par le ou les capteurs, élaborant des signaux de commande capables d'enclencher et de déclencher le passage du courant dans la ou les phases de l'enroulement de manière telle que le rotor (4) tourne à une vitesse sensiblement constante.

3. Dispositif d'entraînement selon la revendication 2, caractérisé en ce que le rotor (4) à aimantation permanente comporte une région principale (10) divisée en zones polaires réparties autour de l'axe du rotor par paires de zones de polarité opposée et une région auxiliaire (11) comportant un nombre de zones polaires auxiliaires qui est un multiple de celui des zones polaires principales, un nombre prédéterminé de zones polaires auxiliaires étant attribué à chaque zone polaire principale, et le générateur de signaux d'orientation (c, F, G) étant agencé de façon à coopérer avec les dites zones polaires auxiliaires.

4. Dispositif selon la revendication 3, caractérisé en ce que le nombre des zones polaires auxiliaires (11) associé à chaque zone polaire principale (10) est égal aux nombre des phases de l'enroulement.

5. Dispositif selon la revendication 3 ou la revendication 4, caractérisé en ce que le générateur des signaux d'orientation comporte un seul capteur (c) placé de manière à réagir à des variations de champ dues au passage des zones polaires auxiliaires (11) et en ce que le circuit de traîtement (S) est agencé de manière à élaborer les signaux de commande à partir des signaux d'orientation et de données relatives au nombre des phases et des pôles.

6. Dispositif selon la revendication 1, caractérisé en ce qu'il comporte en outre une commande programmée agissant sur les moyens sélecteurs(s).

## Claims

1. Drive device for an electric motor comprising a stator (1) and a rotor (4) forming two parts of the motor one of which (1) comprises a motor winding (2, 3) of one or several phases, and the other a permanently magnetized magnetic element with one or several pairs of poles, and consisting further of control means (P, C, cFG, H, S) characterized in that the control means are composed of a combination of, on the one hand, a clock signal generator (H) and an orientation signal generator (F) indicating the orientation of the rotor at successive instants, and, on the other hand, control means (C) connected to the two generators (H, F) and disposed in a manner to control the periodical triggering and release of the said phase or phases of the winding selectively according to one of the two modes of operation which comprise a first mode wherein the control means (C) responding to the clock signals emitted by the clock signal generator (H) and a second mode wherein the control means (C) responding to the orientation signals emitted by the orientation signal generator (FG), and selection means (S) permitting utilization at will of the one or the other said modes of operation.

2. Drive device according to claim 1, characterized in that the orientation signal generator comprises one or several sensors ($C_1$, $C_2$, C) having predetermined locations, fixed in relation to the winding (2, 3) and sensitive to variations of field of the magnetic element (4) at said locations, and in that the control means comprise a circuit for processing (F; S) the signals emitted by the sensor or sensors, working out the control signals capable of triggering and releasing the passage of current in the phase or phases of the winding in such a manner that the rotor (4) turns at a more or less constant speed.

3. Drive device according to claim 2, characterized in that the permanently magnetized rotor (4) comprises a principal region (10) divided into polar zones distributed around the axis of the rotor in pairs of zones of opposite polarity and an auxiliary region (11) comprising a number of auxiliary polar zones which is a multiple of the number of principal polar zones, a predetermined number of auxiliary polar zones being allotted to each principal polar zone, and the orientation signal generator (c, F, G) being disposed in such a way as to cooperate with said auxiliary polar zones.

4. Device according to claim 3, characterized in that the number of auxiliary polar zones (11) associated with each principal polar zone (10) is equal to the number of phases of the winding.

5. Device according to claim 3 or claim 4, characterized in that the orientation signal generator comprises a single sensor (C) placed in such a way as to react to the variations of field due to the passage of the auxiliary polar zones (11) and in that the processing circuit (F) is disposed in such a way as to work out the control signals on the basis of the orientation signals and of data relating to the number of phases and poles.

6. Device according to claim 1, characterized in that it comprises further a programmed control acting upon the selection means (S).

## Patentansprüche

1. Antriebsvorrichtung für einen elektrischen Motor mit einem Stator (1) und einem Rotor (4), welche zwei Teile des Motors bilden, wovon der eine (1) eine ein- oder mehrphasige Motorwicklung (2, 3) und der andere ein magnetisches Organ (4) umfasst, welches dauermagnetisiert ist und ein oder mehrere Polpaare aufweist, wobei die Vorrichtung im weiteren Antriebsmittel (P, C, cFG, H, S) enthält, dadurch gekennzeichnet, dass die Antriebsmittel, miteinander verknüpft, einerseits einen Taktsignalgenerator (H) und einen Stellungssignalgenerator (F), welcher die Stellung des Rotors an sich folgenden Zeitabschnitten angibt und andererseits Steuermittel (C) aufweisen, welche mit den zwei Generatoren (H, FG) verbunden und so ausgerüstet sind, um das periodische Ein- und Ausschalten der einen oder mehrerer der genannten Phasen selektiv nach einem von zwei Betriebsmoden zu steuern, welche einen ersten Modus beinhalten bei dem die Steuermittel (C) auf die vom Taktsignalgenerator (H) ausgesendeten Taktsignale ansprechen, und einen zweiten Modus aufweisen bei dem die Steuermittel (C) auf die vom Stellungssignalgenerator (FG) ausgesendeten Stellungssignale ansprechen, und dass Auswahlmittel (S) vorhanden sind die das willkürliche Benutzen des einen oder anderen der genannten Betriebsmoden erlauben.

2. Antriebsvorrichtung nach Anspruch 1, dadurch gekennzeichnet, dass der Stellungssignalgenerator ein oder mehrere Fühler (c1, c2, c) umfasst, welche an vorbestimmten, in Bezug auf die Wicklung (2, 3) festen Stellen angeordnet und an diesen Stellen auf Feldäderungen des magnetischen Organes (4) empfindlich sind, und dass die Steuermittel einen Verarbeitungsstromkreis (F; S) für die von dem oder den Fühlern abgegebenen Signale enthalten, welcher Steuersignale erzeugt die befähigt sind, den Stromfluss in der oder den Phasen der Wicklung so ein- und auszuschalten, dass der Rotor (4) mit einer ungefähr konstanten Geschwindigkeit dreht.

3. Antriebsvorrichtung nach Anspruch 2, dadurch gekennzeichnet, dass der dauermagnetisierte Rotor (4) einen Hauptbereich (10) umfasst, der in polare Zonen unterteilt ist, welche durch Zonenpaare mit entgegengesetzter Polarität um die Achse des Rotors verteilt sind, sowie einen Hilfsbereich (11) mit einer Anzahl von polaren Hilfszonen aufweist, wobei die Anzahl der Hilfszonen ein Vielfaches der Anzahl der polaren Hauptzonen ist und eine vorbestimmte Anzahl von polaren Hilfszonen jeder der Hauptzonen zugeordnet ist, und dass der Stellungssignalgenerator (c, F, G) zum Mitwirken mit den polaren Hilfszonen eingerichtet ist.

4. Vorrichtung nach Anspruch 3, dadurch gekennzeichnet, dass die Anzahl der polaren Hilfszonen (11), die jeder polaren Hauptzone (10) zugeordnet sind, gleich ist wie die Anzahl der Phasen der Wicklung.

5. Vorrichtung nach Anspruch 3 oder 4, dadurch

13 EP 0 189 732 B1 14

gekennzeichnet, dass der Stellungssignalgenerator einen einzigen Fühler (c) aufweist, der so angeordnet ist, um auf die Feldänderungen, die beim Vorüberziehen der Hilfszonen hervorgerufen werden, zu reagieren, und dass der Verarbeitungsstromkreis (S) so ausgerüstet ist, um aus den Stellungssignalen und von auf die Anzahl der Phasen und der Pole bezogenen Daten die Steuersignale zu erzeugen.

6. Vorrichtung nach Anspruch 1, dadurch gekennzeichnet, dass sie im weiteren eine programmierte Steuerung, die auf die Auswahlmittel (S) anspricht, umfasst.

8

# FIG. 1

# FIG.2

# FIG.5

# FIG.6

## FIG. 3

## FIG.4

FIG. 7

EP 0 189 732 B1